# EUROPEAN PATENT APPLICATION

(11) **EP 4 356 709 A1**
(43) Date of publication of application: **24.04.2024**
(21) Application number: 23186823.3
(22) Date of filing: 20.07.2023
(51) Int. Cl.: A01D 1/00

(54) **LIQUID DETECTION SENSOR FOR A ROBOTIC GARDEN TOOL**

(30) Priority: 29.07.2022 US 202217877141
(71) Applicant: Techtronic Cordless GP, Anderson, SC 29621 (US)
(72) Inventor: HU, Wei, Dongguan City (CN); LIU, Heng Sheng, Dongguan City (CN); YIN, Bang Jie, Dongguan City (CN); MA, Liang, Dongguan City (CN)
(74) Representative: Zimmermann & Partner Patentanwälte mbB

(57) **Abstract**

Embodiments of the disclosure provide a method, device, and system for detecting liquid contacting a robotic garden tool. The robotic garden tool may include a housing, and a user interface forming part of an outer surface of the housing. The robotic garden tool may also include a sensor coupled to the user interface. The sensor may be configured to sense a capacitance level associated with at least a portion of the user interface. The robotic garden tool may also include an electronic processor coupled to the sensor and configured to control an operation of the robotic garden tool based on an output of the sensor.

## Description

### RELATED APPLICATIONS

This application claims priority to U.S. Patent Application No. 17/877,141, filed on July 29, 2022 (Attorney Docket No.: 206737-9064-US01), the entire contents of which are hereby incorporated by reference.

### FIELD

The present disclosure relates to robotic garden tools, particularly to liquid detection sensors for robotic garden tools.

### SUMMARY

One embodiment includes a robotic garden tool that may include a housing, and a user interface forming part of an outer surface of the housing. The robotic garden tool may also include a sensor coupled to the user interface. The sensor may be configured to sense a capacitance level associated with at least a portion of the user interface. The robotic garden tool may also include an electronic processor coupled to the sensor and configured to control an operation of the robotic garden tool based on an output of the sensor.

The user interface of the robotic garden tool may include a user-actuatable button configured to enable user interaction with the robotic garden tool. The user-actuatable button may include the at least a portion of the user interface. The user-actuatable button may include an indented portion. The indented portion may be indented in a shape to convey a function of the user-actuatable button to a user. The user-actuatable button may include a user-actuatable stop button. The robotic garden tool may be configured to stop operating in response to determining that the user-actuatable stop button has been actuated.

The user interface of the robotic garden tool may include an indicator configured to provide a notification to a user. The indicator may include the at least a portion of the user interface. The indicator may include a liquid detection indicator. The liquid detection indicator may include a light emitting element, an indented portion, or both the light emitting element and the indented portion.

The at least a portion of the user interface of the robotic garden tool may include includes a surface treated to increase an affinity of the surface to liquid to facilitate liquid accumulation on the surface.

The sensor of the robotic garden tool may include a sensing surface disposed on an interior surface of the at least a portion of the user interface.

The electronic processor of the robotic garden tool may be configured to receive, from the sensor, a signal that indicates the capacitance level. The electronic processor may be further configured to compare the capacitance level to a predetermined capacitance threshold. The predetermined capacitance threshold may be associated with a predetermined amount of liquid being present on the at least a portion of the user interface. The electronic processor may be further configured to determine that the capacitance level has passed the predetermined capacitance threshold. The electronic processor may be further configured to in response to determining that the capacitance level has passed the predetermined capacitance threshold, control the operation of the robotic garden tool. The electronic processor may be configured to determine that the capacitance level has passed the predetermined capacitance threshold by determining that the capacitance level has passed the predetermined capacitance threshold for a predetermined de-bounce time period.

The electronic processor of the robotic garden tool may be configured to control the operation of the robotic garden tool by at least one of: (i) navigating the robotic garden tool to a docking station, (ii) transmitting, via a network interface of the robotic garden tool, a liquid detection notification to an external device, or both (i) and (ii).

Another embodiment includes a robotic garden tool that may include a housing, and an interface disposed on the housing. The interface may be configured to enable user interaction with the robotic garden tool. The robotic garden tool may also include an indented portion on the robotic garden tool. The robotic garden tool may also include a sensor coupled to the indented portion. The sensor may be configured to sense a capacitance level associated with at least a surface of the indented portion. The robotic garden tool may also include an electronic processor coupled to the sensor and configured to control an operation of the robotic garden tool based on an output of the sensor. 12.

The sensor of the robotic garden tool may include a sensing surface disposed on an interior surface of the indented portion.

The sensor of the robotic garden tool may include a sensing surface located on a side wall of an interior surface of the indented portion, a top wall of the interior surface of the indented portion, or both the side wall and the top wall.

The interface of the robotic garden tool may include the indented portion. The indented portion may be indented in a shape to convey a function of the interface to a user.

The interface of the robotic garden tool may include a user-actuatable stop button. The indented portion may be provided on the user-actuatable stop button.

The interface of the robotic garden tool may include a control panel configured to provide information to a user. The indented portion may be disposed within the control panel.

The electronic processor of the robotic garden tool may be configured to receive, from the sensor, a signal that indicates the capacitance level. The electronic processor may be further configured to compare the capacitance level to a predetermined capacitance threshold. The predetermined capacitance threshold may be associated with a predetermined amount of liquid being present on the at least a surface of the indented portion. The electronic processor may be further configured to determine that the capacitance level has passed the predetermined capacitance threshold. The electronic processor may be further configured to in response to determining that the capacitance level has passed the predetermined capacitance threshold, control the operation of the robotic garden tool.

The electronic processor of the robotic garden tool may be configured to determine that the capacitance level has passed the predetermined capacitance threshold by determining that the capacitance level has passed the predetermined capacitance threshold for a predetermined de-bounce time period.

The robotic garden tool may also include a network interface to allow the robotic garden tool to wirelessly communicate with an external device. The electronic processor of the robotic garden tool may be configured to receive, via the network interface, a first indication of whether to enable liquid detection by the electronic processor using the sensor. The first indication may be selected via a first user input on the external device. The electronic processor may be configured to receive, via the network interface, a second indication of how to control the operation of the robotic garden tool in response to determining that the capacitance level has passed a predetermined capacitance threshold. The second indication may be selected via a second user input on the external device.

Other aspects of the disclosure will become apparent by consideration of the detailed description and accompanying drawings.

### BRIEF DESCRIPTION OF THE DRAWINGS

FIG. 1A illustrates a communication system including a robotic garden tool according to some example embodiments.
FIG. 1B illustrates a bottom perspective view of the robotic garden tool of FIG. 1A according to some example embodiments.
FIG. 1C illustrates a top view of the robotic garden tool of FIG. 1A according to some example embodiments.
FIG. 1D illustrates a bottom view of an interface of the robotic garden tool of FIG. 1A according to some example embodiments.
FIG. 1E illustrates a bottom perspective view of the interface the robotic garden tool of FIG. 1A according to some example embodiments.
FIG. 1F illustrates a top perspective view of a user interface of a control panel of the robotic garden tool of FIG. 1A that includes an indicator according to some example embodiments.
FIG. 2 is a block diagram of the robotic garden tool of FIG. 1A according to some example embodiments.
FIG. 3 is a block diagram of the external device of FIG. 1A according to some example embodiments.
FIG. 4 illustrates a flowchart of a method that may be performed by the robotic garden tool of FIG. 1A to detect a liquid according to some example embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling. Further, "connected" and "coupled" are not restricted to physical or mechanical connections or couplings, and can include electrical connections or couplings, whether direct or indirect.

It should be noted that a plurality of hardware and software based devices, as well as a plurality of different structural components may be utilized to implement the invention. Furthermore, and as described in subsequent paragraphs, the specific configurations illustrated in the drawings are intended to exemplify embodiments of the invention and that other alternative configurations are possible. The terms "processor," "central processing unit," and "CPU" are interchangeable unless otherwise stated. Where the terms "processor" or "central processing unit" or "CPU" are used as identifying a unit performing specific functions, it should be understood that, unless otherwise stated, those functions can be carried out by a single processor, or multiple processors arranged in any form, including parallel processors, serial processors, tandem processors or cloud processing/cloud computing configurations.

Throughout this application, the term "approximately" may be used to describe the dimensions of various components and/or paths of travel of a robotic garden tool. In some situations, the term "approximately" means that the described dimension is within 1% of the stated value, within 5% of the stated value, within 10% of the stated value, or the like. When the term "and/or" is used in this application, it is intended to include any combination of the listed components. For example, if a component includes A and/or B, the component may include solely A, solely B, or A and B.

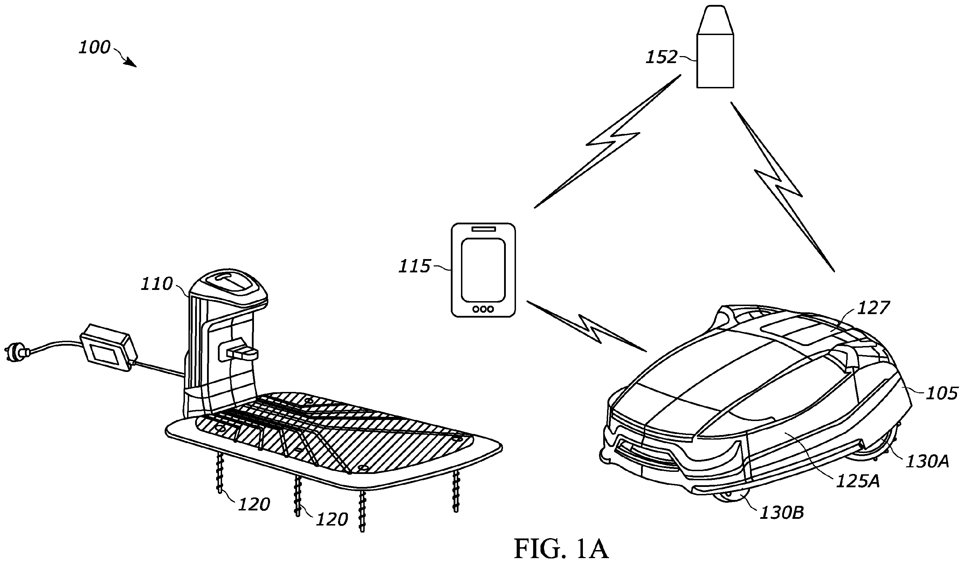

FIG. 1A illustrates a communication system 100 that may include a robotic garden tool 105 (e.g., a robotic lawn mower 105 that may also be referred to as a robotic mower 105), a docking station 110 for the robotic mower 105, an external device 115, and a server 152 according to some example embodiments. The robotic garden tool 105 is primarily described as being a robotic mower 105. However, in other embodiments, the robotic garden tool 105 may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the robotic garden tool 105 may include a vacuum cleaner, a trimmer, a string trimmer, a hedge trimmer, a sweeper, a cutter, a plow, a blower, a snow blower, etc.

In some embodiments, a lawn may include any type of property that includes grass, a crop, some other material to be trimmed, cleared, gathered, etc., and/or that includes some material to receive treatment from the robotic garden tool 105 (e.g., fertilizer to treat grass in the lawn). In some embodiments, a lawn may include paved portions of a property (e.g., a driveway), for example, when the robotic garden tool 105 is used for snow plowing/removal.

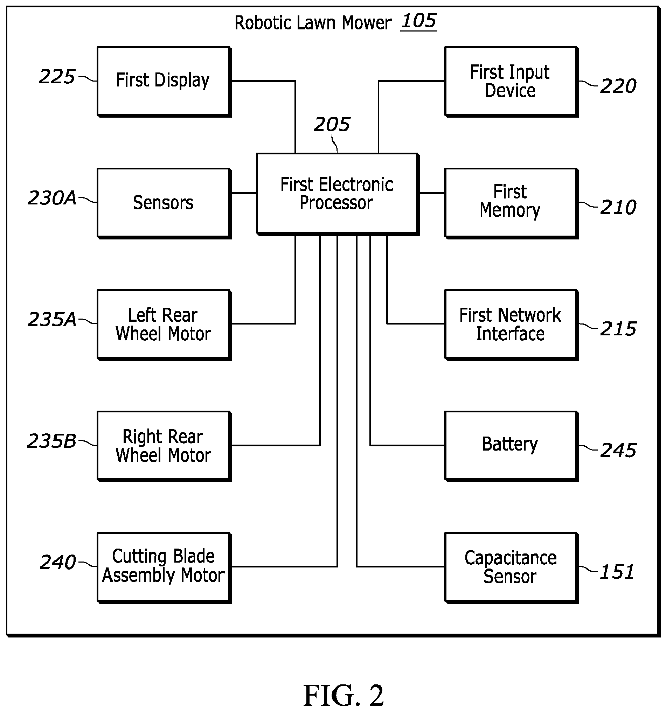

In some embodiments, the docking station 110 may be installed in a yard/lawn using stakes 120. The robotic mower 105 may be configured to mow the yard and dock at the docking station 110 in order to charge a battery 245 of the robotic mower 105 (see FIG. 2). In some embodiments, the docking station 110 is configured to make an electrical connection with a power supply (e.g., via a cord and plug connected to a wall outlet that is connected to a power grid) in order to provide charging current to the robotic mower 105 when the robotic mower 105 is electrically coupled with the docking station 110.

In some embodiments, the docking station 110 may also be electrically connected to a boundary cable (i.e., boundary wire). In some embodiments, the docking station 110 provides power to the boundary cable to control the boundary cable to provide/emit, for example, an electromagnetic signal that may be detected by the robotic mower 105. In some embodiments, the boundary cable may be any cable, wire, etc. that is configured to transmit a signal and that is configured to be installed on an operating surface (e.g., a yard including grass) in a discrete and unobtrusive manner (e.g., secured at the base of the blades of grass against the ground/soil in which the grass is growing to prevent the robotic mower 105 and other people or objects from being physically obstructed by the boundary cable). For example, a plurality of pegs/stakes may be used to pin the boundary cable to the ground/soil. As another example, the boundary cable may be buried in the ground/soil underneath the grass (e.g., if the boundary cable is installed when a plot of land is being developed). In some embodiments, in response to detecting the electromagnetic signal from the boundary cable, the robotic mower 105 is configured to control its movement such that the robotic mower 105 remains within a boundary defined by the boundary cable. For example, in response to detecting the boundary cable, the robotic mower 105 may be configured to stop moving forward and turn in a random direction to begin traveling in an approximately straight line until the robotic mower 105 again detects the boundary cable.

In some embodiments, the robotic mower 105 does not operate in conjunction with a boundary cable. Rather, the robotic mower 105 may include mapping capabilities, positioning tracking capabilities, and/or the like that allow the robotic mower 105 to remain within a predefined boundary (e.g., a virtual boundary) without the use of the boundary cable.

In some embodiments, the docking station 110 includes a docking cable loop, a magnet configured to be sensed by a magnetic sensor of the robotic mower 105, and/or another transmitting device configured to emit a docking signal that may be detected by the robotic mower 105. For example, the docking signal may indicate that the robotic mower 105 is near the docking station 110 and may allow the robotic mower 105 to take certain actions in response thereto to, for example, dock the robotic mower 105 at the docking station 110.

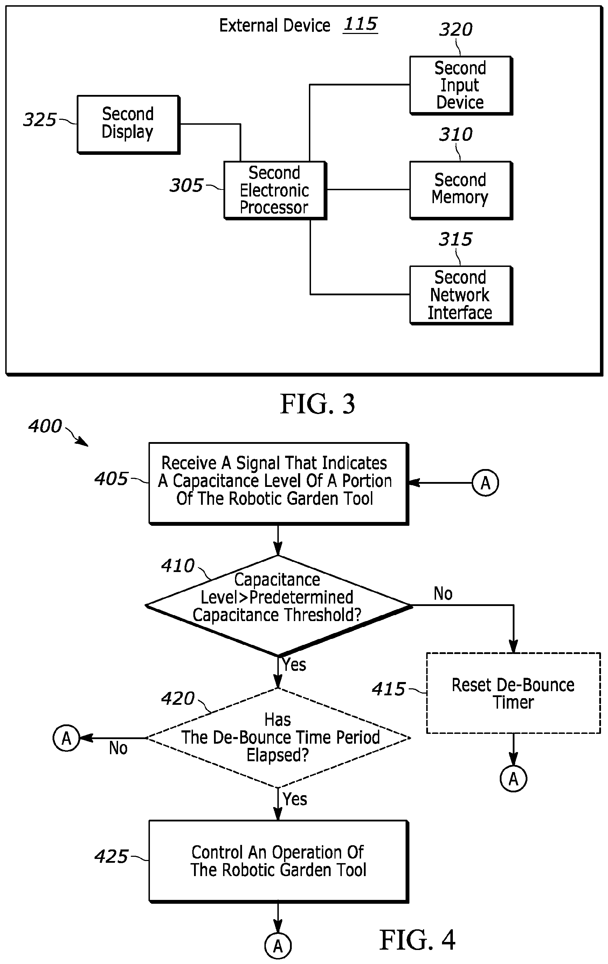

As indicated in FIG. 1A, in some embodiments, the robotic mower 105 is configured to bidirectionally wirelessly communicate with the external device 115 and/or the server 152. In some embodiments, the robotic mower 105 is configured to directly communicate with the external device 115 when the robotic mower 105 is within communication range of the external device 115 (e.g., via Bluetooth^{™}, WiFi^{™}, or the like). In some embodiments, the robotic mower 105 is additionally or alternatively configured to communicate with the external device 115 via an intermediary device such as the server 152, a cellular communication tower/base station, another device in a cellular network, or the like (e.g., when the robotic mower 105 is outside of direct communication range with the external device 115). The external device 115 may be, for example, a smart phone (as illustrated), a laptop computer, a tablet computer, a personal digital assistant (PDA), a wireless communication router that allows another external device 115 that is located remotely from the robotic mower 105 to communicate with the robotic mower 105, or another electronic device capable of communicating with the robotic mower 105. The external device 115 may generate a grpahical user interface on a display (e.g., second display 325 of FIG. 3) and allow a user to access and interact with robotic mower information. The external device 115 may receive user inputs to determine operational parameters/instructions for the robotic mower 105, enable or disable features of the robotic mower 105, and the like. In some embodiments, the communication between the external device 115 and the robotic mower 105 may be wired (e.g., via a Universal Serial Bus (USB) cord configured to connect to respective USB ports of the external device 115 and the robotic mower 105).

While FIG. 1A illustrates one robotic mower 105, one charging station 110, and one external device 115, in some embodiments, the communication system 100 includes additional robotic mowers 105, charging stations 110, and/or external devices 115. In some embodiments, a single external device 115 may be configured to communicate with multiple robotic mowers 105 to control and/or monitor the multiple robotic mowers 105. In some embodiments, a single robotic mower 105 may be configured to communicate with multiple external devices 115, for example, to receive operating instructions from multiple externals devices 115 of a user at different times. While FIG. 1A illustrates one server 152, in some embodiments, the communication system 100 includes additional servers 152. In some embodiments, the communication system 100 may not include any servers 152. While not shown in FIG. 1A, as mentioned above, in some embodiments, the communication system 100 may include a network such as a cellular network that includes one or more devices that act as an intermediary device to allow the robotic mower 105 to bidirectionally communicate with the external device 115 when the robotic mower 105 and the external device 115 are not within direct communication range of each other.

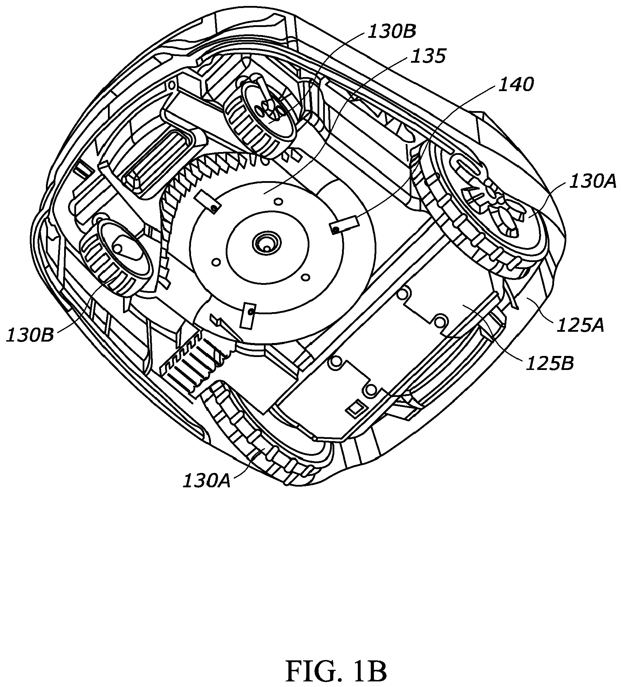

FIG. 1B illustrates a bottom perspective view of the robotic mower 105 according to some example embodiments. The robotic mower 105 may include a housing 125 that may include an outer housing 125A (i.e., outer housing shell) and an inner housing 125B. The outer housing 125A may be coupled to the inner housing 125B. The robotic mower 105 also may include wheels 130 (i.e., a set of wheels 130) coupled to the inner housing 125B and configured to rotate with respect to the housing 125 to propel the robotic mower 105 on an operating surface (e.g., a yard to be mowed). The wheels 130 may include motor-driven wheels 130A and non-motor-driven wheels 130B. In the embodiment shown in FIG. 1B, two rear wheels 130A are motor-driven wheels 130A while two front wheels 130B are non-motor-driven wheels 130B. In other embodiments, the robotic mower 105 may include a different wheel arrangement (e.g., a different number of total wheels, a different number of each type of wheel, different wheels being motor-driven or non-motor-driven, and/or the like). In some embodiments, the housing 125 may not include the outer housing 125A and the inner housing 125B. Rather, the housing 125 may include a single integrated body/housing to which the wheels 130 are attached.

In some embodiments, the robotic mower 105 includes a wheel motor 235 (see FIG. 2) coupled to one or more wheels 130 and configured to drive rotation of the one or more wheels 130. In some embodiments, the robotic mower 105 includes multiple wheel motors 235 where each wheel motor 235 is configured to drive rotation of a respective motor-driven wheel 130A (see FIG. 2).

In some embodiments, the robotic mower 105 includes a cutting blade assembly 135 coupled to the inner housing 125B and configured to rotate with respect to the housing 125 to cut grass on the operating surface. The cutting blade assembly 135 may include a rotating disc to which a plurality of cutting blades 140 configured to cut the grass are attached. In some embodiments, the robotic mower 105 includes a cutting blade assembly motor 240 (see FIG. 2) coupled to the inner housing 125B and to the cutting blade assembly 135. The cutting blade assembly motor 240 may be configured to drive rotation of the cutting blade assembly 135 to cut the grass on the operating surface.

In some embodiments, the robotic mower 105 and/or the docking station 110 include additional components and functionality than is shown and described herein.

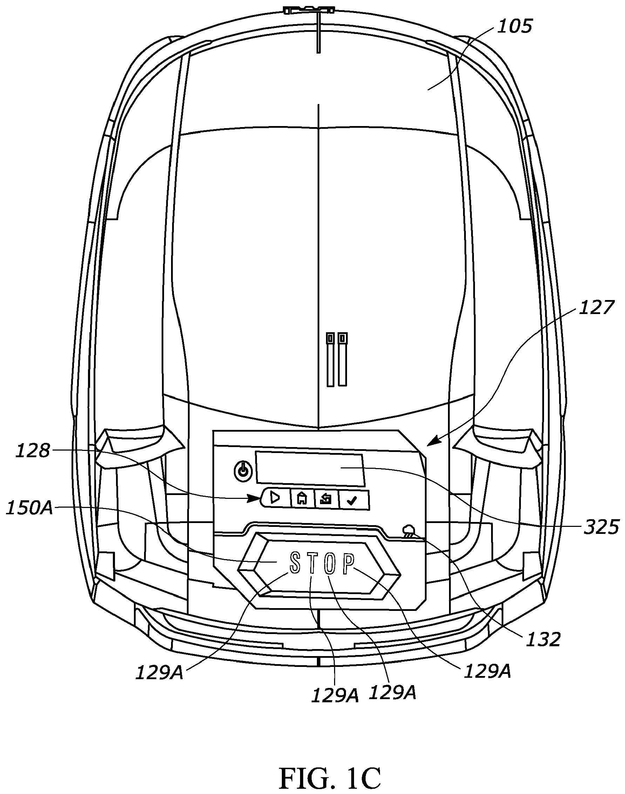

FIG. 1C illustrates a top view of the robotic mower 105 according to some example embodiments. The robotic mower 105 may include a control panel 127. The control panel 127 may be located on a top side of the housing 125. In some instances, one or more components of the control panel 127 are located underneath a door/panel that may be opened by a user to access the one or more components. In some instances, the control panel 127 may be located at a different location on the housing 125 of the robotic mower 105 and/or may be oriented/arranged differently than as shown in FIG. 1C. The control panel 127 may also be referred to as a user interface 127.

The control panel 127 may be configured to receive a user input to control one or more functions of the robotic mower 105. The control panel 127 also may include one or more output devices (e.g., a screen, an indicator such as a light emitting diode (LED), etc.) to provide information to a user. In the embodiment shown in FIG. 1C, the control panel 127 includes a display 325 and one or more buttons 128, 129. The display 325 and the buttons 128, 129 are configured to enable interaction between the robotic mower 105 and a user. In some embodiments, the one or more buttons 128, 129 receive user inputs and the display 325 (and/or other output devices such as an indicator) outputs information to the user. The buttons 128, 129 and/or display 325/indicators may be communicatively coupled to an electronic processor 205 of the robotic mower 105 as described below with respect to FIG. 2. In some instances, the control panel 127 may include indicator 132 as shown in FIG. 1C. The indicator 132 may be configured to provide a notification to a user. In some embodiments, the indicator 132 includes one or more light emitting diodes (LEDs) that indicate that liquid is detected on the robotic mower 105. In some embodiments, the indicator 132 includes a light guide feature and/or an E-ink display in a shape (e.g., a cloud, a rain drop, etc.) that indicates that the indicator 132 is a liquid detection indicator 132.

The button 129 (i.e., a user-actuatable button 129 or interface 129 may be disposed on the housing 125 and configured to enable user interaction with the robotic mower 105. An electronic component may be associated with the user-actuatable button 129 and may be configured to generate a signal to the electronic processor 205 (see FIG. 2) of the robotic mower 105 when the user-actuatable button 129 is actuated via user input. For example, the user-actuatable button 129 may be a user-actuatable stop button that provides a signal to the electronic processor 205 to control a stop operation of the robotic mower 105. In other words, the user-actuatable stop button may be a mechanism for switching off functionality of the robotic mower 105 abruptly. For example, the electronic processor 205 of the robotic mower 105 may be configured to stop the robotic mower 105 from operating (e.g., by stopping/preventing all motors (see FIG. 2) from operating) in response to determining that the user-actuatable stop button has been actuated. In some instances, the button 129 may have a different function.

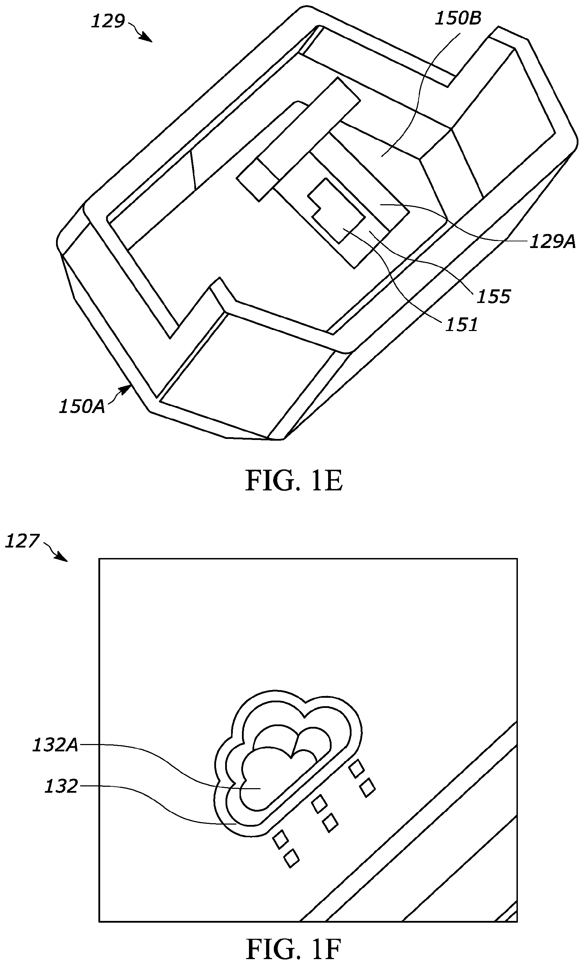

In some embodiments, the button 129 is composed of a non-conductive material, such as, for example, rubber, plastic, or the like. The button 129, the control panel/user interface 127, and/or one or more other portions of the housing 125 may also include an area/portion 129A configured to accumulate liquid that contacts a surface (e.g., a top surface of the button 129 and/or the housing 125) of the robotic mower 105. In some embodiments, the area/portion 129A includes an indented portion 129A that is formed/indented in a shape such as a shape of a letter or letters of an alphabet. For example, the indented portion 129A is formed/indented in a shape (e.g., letters, a polygon, etc.) to convey a function of the button 129 to a user. As shown in the example of FIG. 1C, the indented portion 129A is formed in the shape of the word "STOP" to indicate that the button 129 is a user-actuatable stop button. In some instances, multiple distinct indented portions 129A (e.g., the different letters of the word "STOP" that are shown in FIG. 1C) may be collectively referred to as the indented portion 129A. In some instances, a top surface of the button may include the indented portion 129A, but the bottom/interior surface of the button 129 may not include protrusions defined by the indented portion 129A. In other words, the indented portion 129A may be shallow enough so as not to make protrusions that protrude towards the interior of the robotic mower 105 such as the protrusion of the letter "T" shown in FIG. 1E and explained in greater detail below.

In some instances, the area/portion 129A designed to accumulate liquid includes a surface treated to increase an affinity of the surface to liquid (e.g., increased absorbency) to facilitate liquid accumulation on the surface. For example, the surface of the area/portion 129A may be sanded or otherwise treated to provide texture to allow the surface to better accumulate liquid. As another example, the surface may include a hole or indent that includes a material that is more absorbent than other portions of the robotic mower 105 (e.g., a sponge-like object may be included in the area/portion 129A). The above explanation of the indented portion 129A (e.g., possible shapes of the indented portion 129A) may also apply to other areas/portions 129A of the button 129, the control panel/user interface 127, and/or one or more other portions of the housing 125 that are surface treated to have increased affinity to the liquid. In some instances, the area/portion 129A may include an indented portion 129A that is surface treated to increase its affinity to liquid.

In some instances, one or more area/portions of the housing 125 on the control panel/user interface 127 and/or on other portions of the housing may include the area/portion 129A to accumulate liquid and monitor whether liquid is detected using the sensor 151 and/or the electronic processor 205.

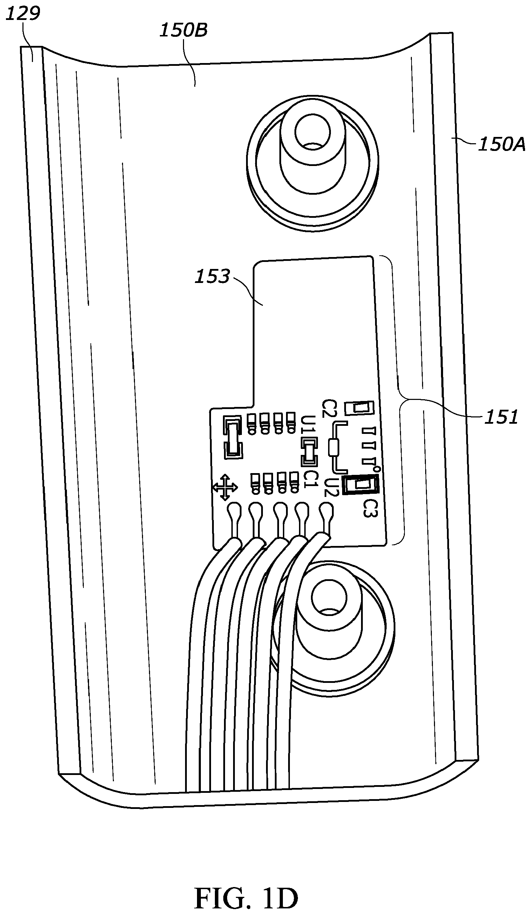

FIG. 1D illustrates a bottom view of the button 129 (i.e., interface 129) of the robotic mower 105 according to some example embodiments. The button 129 may include an exterior surface 150A (shown more completely in FIG. 1C) and an interior surface 150B. The exterior surface 150A is exposed to an environment of the robotic mower 105 and may be visible by the user during operation of the robotic mower 105. On the other hand, the interior surface 150B (shown in FIG. 1D) is not exposed to the environment of the robotic mower 105 and is not visible by the user during operation of the robotic mower 105. In some instances, the interior surface 150B of the button 129 includes a sensor 151 (i.e., a capacitance sensor 151 that acts as a liquid detection sensor 151 as explained in greater detail herein). The sensor 151 may be configured to sense a capacitance level associated with at least a surface of the area/portion 129A (e.g., detect a change in the capacitance level of the area/portion 129A) and transmit a signal related to the capacitance level to the electronic processor 205 (see FIG. 2). In certain embodiments, the sensor 151 may include one or more sensing surfaces (e.g., sensor pads) that provide sensed data associated with the button 129 (e.g., data indicative of the capacitance of at least a surface of the area/portion 129A of the button 129). The sensor 151 may include its own electronic processor (e.g., a microprocessor, etc.) configured to communicate with the one or more sensor pads and/or with the electronic processor 205 of the robotic mower 105. Accordingly, the sensor 151 may provide raw data to the electronic processor 205 of the robotic mower 105 and/or the sensor 151 may process the raw data itself to determine whether liquid is present and then provide an indication to the electronic processor 205 that indicates whether liquid is present. In some instances, one or more components of the sensor 151 (e.g., sensor pads, microprocessor, etc.) may be mounted on a printed circuit board (PCB) 153 as shown in FIG. 1D. The sensor 151 (e.g., a PCB 153 that includes components of the sensor 151) may be mounted to the interior surface 150B of the button 129. In some embodiments, the one or more sensor pads of the sensor 151 may be connected to the interior surface 150B of the button 129. As a result, components of the sensor 151 may be protected by the button 129 from contact with elements (e.g., dust, dirt, liquid such as rain, etc.) of an operating environment of the robotic mower 105.

In some instances, a sensing pad (e.g., the one or more sensing pads) of the sensor 151 may be disposed substantially parallel to a top surface of the button 129 on which the area/portion 129A is located (e.g., the indented portion 129A that forms the "STOP" label is located on the top surface of the button 129). For example, FIG. 1D illustrates a PCB 153 mounted substantially parallel to a top surface of the button 129 on a top wall of the interior surface 150B of the button 129. In instances in which the sensing pads are mounted on a surface of the PCB 153 that is not shown in FIG. 1D (i.e., between the PCB 153 and the interior surface 150B of the button 129), FIG. 1D illustrates the sensing pads being disposed substantially parallel to the top surface of the button 129.

Additionally or alternatively, the sensor 151 may include a sensing pad (e.g., one or more sensing pads) located on a side wall 155 of an interior surface of the indented portion 129A and disposed substantially perpendicular to a top surface of the button 129. FIG. 1E illustrates a bottom perspective view of the button 129 of the robotic mower 105 according to some example embodiments. In the example shown in FIG. 1E, a portion of the indented portion 129A that is formed in the shape of the letter "T" is indented far enough inward/downward to provide a large enough interior surface on a side wall 155 of the indented letter "T" to allow the sensor 151 to be mounted thereon. In other words, the one or more sensor pads of the sensor 151 may be mounted on an interior surface of the side wall 155 of a portion of the indented portion 129A formed in the shape of the letter "T". As indicated in the example of FIG. 1E, the one or more sensor pads of the sensor 151 may be disposed substantially perpendicular to a top surface of the button 129. Such location/arrangement of the sensor 151 may be advantageous because the indented letter "T" may be sized such that liquid (e.g., rain) may be able to enter into a cavity of the indented letter "T" while a user's finger may not be able enter the cavity (e.g., because the finger is too large). Accordingly, the sensor 151 may more accurately determine that a change in capacitance is caused by a liquid entering the cavity as opposed to being caused by a user's finger pressing the button 129. With such a location/arrangement, the de-bouncing determination described later herein may not be necessary since a user's finger pressing the button 129 may not cause a change in capacitance that exceeds a predetermined capacitance threshold that is also described later herein. Although FIG. 1E shows only the indented letter "T", other portions of the indented portion 129A (e.g., other letters) may include indentations of similar or different depths. The sensor 151 may additionally or alternatively be mounted on these other portions of the indented portion 129A (e.g., on a side wall of other portions of the indented portion 129A).

FIG. 1F illustrates a top perspective view of a portion of the control panel/user interface 127 that includes the indicator 132 according to some example embodiments. The indicator 132 may include indented indicator portion 132A. The indented indicator portion 132A may be positioned within the indicator 132 (e.g., inside of a light guide structure that emits light from an LED when the indicator 132 is enabled). The indented indicator portion 132A may be configured to accumulate liquid that contacts a surface of the robotic mower 105 (e.g., the user interface of the control panel 127). In some embodiments, the one or more sensor pads of the sensor 151 may be located on an interior surface of the control panel 127 (e.g., on an interior surface of the indented indicator portion 132A). In those embodiments, the one or more sensor pads of the sensor 151 may be disposed in a similar manner as described previously herein and as shown with respect to embodiments of FIGS. 1D-E. As indicated by the above explanation of FIG. 1F, in some instances, the robotic mower 105 may include an indented portion 132A disposed within the control panel 127, and the sensor 151 may be coupled to an interior surface of the indented portion 132A in order to sense a capacitance level associated with the indented portion 132A that may change when liquid is present within the indented portion 132A. The indicator 132 and the indented indicator portion 132A may be located in other locations on the robotic mower 105 in other embodiments. In some instances, the indicator 132 includes a surface treated to increase an affinity of the surface to liquid (e.g., increased absorbency) to facilitate liquid accumulation on the surface as explained previously herein with respect to the area/portion 129A. In such instances, the indicator 132 may or may not also include the indented indicator portion 132A. In some instances, the indented indicator portion 132A includes a surface treated to increase an affinity of the surface to liquid (e.g., increased absorbency) to facilitate liquid accumulation on the surface. The previous explanation of the area/portion 129A may apply to the indicator 132. In other words, the area/portion 129A described previously herein may be integrated within the indicator 132 on the control panel/user interface 127. In some instances, using the same component (e.g., the indicator 132) for (i) detecting liquid and (ii) as a liquid detection indicator provides an intuitive/implicit instruction to the user that the indicator 132 should not be covered/blocked and/or contaminated.

FIG. 2 is a block diagram of the robotic mower 105 according to some example embodiments. In the embodiment illustrated, the robotic mower 105 includes a first electronic processor 205 (for example, a microprocessor or other electronic device). The first electronic processor 205 includes input and output interfaces (not shown) and is electrically coupled to a first memory 210, a first network interface 215, an optional first input device 220, an optional display 225, one or more sensors 230 and 151, a left rear wheel motor 235A, a right rear wheel motor 235B, a cutting blade assembly motor 240, and a battery 245. In some embodiments, the robotic mower 105 includes fewer or additional components in configurations different from that illustrated in FIG. 2. For example, the robotic mower 105 may not include the first input device 220 and/or the first display 225. As another example, the robotic mower 105 may include a location tracking device (e.g., a global positioning system (GPS) receiver) and/or a height adjustment motor configured to adjust a height of the cutting blade assembly 135. As yet another example, the robotic mower 105 may include additional sensors or fewer sensors than the sensors 230, 151 described herein. In some embodiments, the robotic mower 105 performs functionality other than the functionality described below.

The first memory 210 may include read only memory (ROM), random access memory (RAM), other non-transitory computer-readable media, or a combination thereof. The first electronic processor 205 is configured to receive instructions and data from the first memory 210 and execute, among other things, the instructions. In particular, the first electronic processor 205 executes instructions stored in the first memory 210 to perform the methods described herein.

The first network interface 215 is configured to send data to and receive data from other devices in the communication system 100 (e.g., the external device 115, the server 152, etc.). In some embodiments, the first network interface 215 includes one or more transceivers for wirelessly communicating with the external device 115 and/or the docking station 110 (e.g., a first radio frequency (RF) transceiver configured to communicate via Bluetooth^{™}, WiFi^{™}, or the like). The first network interface 215 may include an additional transceiver for wirelessly communicating with the server 152 via, for example, cellular communication. In some embodiments, at least some of the transceivers and/or receivers of the robotic mower 105 may be combined or share some elements (e.g., an antenna and/or other hardware). Alternatively or additionally, the first network interface 215 may include a connector or port for receiving a wired connection to the external device 115, such as USB cable.

The first user input device 220 is configured to allow the first electronic processor 205 to receive a user input from a user to, for example, set/adjust an operational parameter of the robotic mower 105. In some embodiments, the first user input device 220 includes, for example, buttons 128, the button 129, and/or the like. The first display 225 is configured to display a graphical user interface to the user. Similar to the graphical user interface of the external device 115 described previously herein, the graphical user interface displayed on the first display 225 may allow the user to access and interact with robotic mower information. In some embodiments, the first display 225 may also act as the first input device 220. For example, a touch sensitive input interface may be incorporated into the first display 225 to allow the user to interact with content provided on the first display 225. The first display 225 may be a liquid crystal display (LCD) screen, an organic light emitting display (OLED) display screen, or an E-ink display. In some embodiments, the first display 225 is included, for example, as part of the control panel/user interface 127. In some embodiments, the first display 225 includes future-developed display technologies.

In some embodiments, the first electronic processor 205 is in communication with a plurality of sensors 230 that may include electromagnetic field sensors, radio frequency sensors (e.g., radio frequency identification (RFID) interrogators/sensors), Hall sensors, other magnetic sensors, a transceiver/receiver of the first network interface 215, and/or the like. In some embodiments, the first electronic processor 205 is also in communication with one or more sensors 151 described previously herein. The sensor 151 may be a capacitance sensor 151 configured to sense a capacitance level associated with the area/portion 129A of the button 129 as explained previously herein. For example, a capacitance of at least a portion of the button 129 may change depending on whether a user's finger/hand is pressing the button 129 and/or depending on whether a liquid (e.g., rain) is present in/on the area/portion 129A of the button 129. In some instances, the capacitance sensor 151 monitors a capacitance of the at least a portion of the button 129 and provides a signal indicative of the capacitance level (or a change in the capacitance level) to the first electronic processor 205.

In some embodiments, the inner housing 125B includes at least two boundary cable sensors in the form of electromagnetic field sensors configured to detect an electromagnetic signal being emitted by the boundary cable. For example, the electromagnetic field sensors may be able to detect a strength and/or a polarity of the electromagnetic signal from the boundary cable.

In some embodiments, the inner housing 125B includes an odometry sensor (e.g., one or more Hall sensors or other types of sensors) for each motor-driven wheel 130A. Data from the odometry sensors may be used by the first electronic processor 205 to determine how far each wheel 130A has rotated and/or how fast each wheel 130A is rotating in order to accurately control movement (e.g., turning capabilities) of the robotic mower 105. For example, the first electronic processor 205 may control the robotic mower 105 to move in an approximately straight line by controlling both of the wheel motors 235A and 235B to rotate at approximately the same speed. As another example, the first electronic processor 205 may control the robotic mower 105 to turn and/or pivot in a certain direction by controlling one of the wheel motors 235A or 235B to rotate faster than or in an opposite direction than the other of the wheel motors 235A or 235B. Similarly, rotating only one of the wheel motors 235A or 235B while the other wheel motor 235A or 235B is not rotated should result in the robotic mower 105 turning/pivoting.

In some embodiments, the inner housing 125B includes a cutting blade assembly motor sensor (e.g., one or more Hall sensors or other types of sensors). Data from the cutting blade assembly motor sensor may be used by the first electronic processor 205 to determine how fast the cutting blade assembly 135 is rotating.

In some embodiments, the battery 245 provides power to the first electronic processor 205 and to other components of the robotic mower 105 such as the motors 235A, 235B, 240 and the first display 225. In some embodiments, power may be supplied to other components besides the first electronic processor 205 through the first electronic processor 205 or directly to the other components. In some embodiments, when power is provided directly from the battery 245 to the other components, the first electronic processor 205 may control whether power is provided to one or more of the other components using, for example, a respective switch (e.g., a field-effect transistor) or a respective switching network including multiple switches. In some embodiments, the robotic mower 105 includes active and/or passive conditioning circuitry (e.g., voltage step-down controllers, voltage converters, rectifiers, filters, etc.) to regulate or control the power received by the components of the robotic mower 105 (e.g., the first electronic processor 205, the motors, 235A, 235B, 240, etc.) from the battery 245. In some embodiments, the battery 245 is a removable battery pack. In some embodiments, the battery 245 is configured to receive charging current from the docking station 110 when the robotic mower 105 is docked at the docking station 110 and electrically connected thereto.

FIG. 3 is a block diagram of the external device 115 according to some example embodiments. In the example shown, the external device 115 includes a second electronic processor 305 electrically connected to a second memory 310, a second network interface 315 (i.e., device network interface 315), a second user input device 320, and a second display 325. These components are similar to the like-named components of the robotic mower 105 explained above with respect to FIG. 2 and function in a similar manner as described above. For example, the second display 325 may also function as an input device (e.g., when the second display 325 is a touchscreen). In some embodiments, the second network interface 315 includes one or more transceivers for wirelessly communicating with the robotic mower 105 (e.g., a second RF transceiver configured to communicate via Bluetooth^{™}, WiFi^{™}, or the like). The second network interface 315 may include an additional transceiver for wirelessly communicating with the server 152 via, for example, cellular communication. The second network interface 315 may also include a second GPS receiver configured to receive a location signal from one or more satellites. In some embodiments, at least some of the transceivers and/or receivers of the external device 115 may be combined or share some elements (e.g., an antenna and/or other hardware). In some embodiments, the second electronic processor 305 sends data to and receives data from the robotic mower 105 and/or other devices of the communication system 100 via the second network interface 315.

In some embodiments, the external device 115 includes fewer or additional components in configurations different from that illustrated in FIG. 3. For example, the external device 115 may include a battery, another GPS receiver, a camera, or the like. In some embodiments, the external device 115 performs functionality other than the functionality described below.

In some embodiments, the server 152 includes similar elements as at least some of the elements described above with respect to the devices 105, 115 that function in a similar manner. For example, the server 152 may include an electronic processor, a memory, and a network interface, among other elements.

In some embodiments, the robotic mower 105 travels within a virtual boundary of the operating area to execute a task (e.g., mowing a lawn). The robotic mower 105 may travel randomly within the operating area defined by the virtual boundary. For example, the robotic mower 105 may be configured to travel in an approximate straight line until the robotic mower 105 determines that it has reached the virtual boundary. In response to detecting the virtual boundary, the robotic mower 105 may be configured to turn in a random direction and continue traveling in an approximate straight line along a new path until the robotic mower 105 again determines that it has reached the virtual boundary, at which point this process repeats. In some embodiments, the robotic mower 105 may travel in a predetermined pattern within the operating area defined by the virtual boundary (e.g., in adjacent rows or columns between sides of the virtual boundary) to more efficiently and evenly mow the lawn within the operating area. In such embodiments, the robotic mower 105 may determine and keep track of its current location within the operating area.

In some embodiments, the robotic mower 105 may be scheduled to operate (e.g., perform a particular task such as mowing a lawn) during certain time periods. In some embodiments, the robotic mower 105 may be manually instructed to operate at a time when the robotic mower 105 was not scheduled to operate. For example, the robotic mower 105 may receive a command from the external device 115 that indicates that the robotic mower 105 should begin operating (e.g., mowing) or should stop operating and return to the docking station 110. Such commands may be received from the external device 115 in response to the external device 115 receiving a user input. In some embodiments, during operation, the first electronic processor 205 of the robotic mower 105 may determine that the robotic mower 105 should return to the docking station 110. For example, the first electronic processor 205 may make such a determination in response to determining that a charge level of the battery 245 is below a predetermined threshold, in response to determining that inclement weather is occurring (e.g., based on detecting high humidity or rain, etc.), or in response to determining that a scheduled time period for operation has elapsed or is about to elapse. The determinations and control of the robotic mower 105 explained herein may be executed by the first electronic processor 205 of the robotic mower 105.

As indicated above, it may be desirable to stop operation of the robotic mower 105 and/or provide a notification to a user when the robotic mower 105 is operating in inclement weather such as rain. However, locating a liquid sensor (e.g., a rain sensor) such as the sensor 151 on the robotic mower 105 may be challenging. For example, in some instances, the sensor 151 should be protected from the environment/inclement weather experienced by the robotic mower 105 (e.g., the sensor 151 should not directly come into contact with liquid such as rain). As another example, it may be desirable to locate the sensor 151 in a location that is hidden/concealed from the user's view but in contact with a location that is capable of collecting liquid when it is raining in the environment of the robotic mower 105.

Thus, there is a technological problem related to the use of a liquid detection sensor(s) for a robotic garden tool. The systems, methods, and devices described herein address the above-noted technological problem by providing specific location(s) of the sensor 151 that allow for accurate sensing of liquid while the sensor 151 is discrete (e.g., hidden/concealed from the user's view). The systems, methods, and devices described herein further protect the sensor 151 from the environment of the robotic mower 105 and also allow for easy installation of the sensor 151 during the manufacturing process of the robotic mower 105.

FIG. 4 illustrates a flowchart of a method 400 that may be performed by the robotic mower 105, particularly by the first electronic processor 205 of the robotic mower 105. While a particular order of processing steps, signal receptions, and/or signal transmissions is indicated in FIG. 4 as an example, timing and ordering of such steps, receptions, and transmissions may vary where appropriate without negating the purpose and advantages of the examples set forth in detail throughout the remainder of this disclosure. While the method 400 is explained below as being performed by the first electronic processor 205, in some instances, a separate electronic processor of the sensor 151 may additionally or alternatively perform one or more blocks (or portions of blocks) explained below. For example, the sensor 151 may provide raw data to the electronic processor 205 of the robotic mower 105 (at block 405) and/or the sensor 151 may process the raw data itself to determine whether liquid is present (e.g., perform block 410) and then provide an indication (e.g., a zero or a one) to the electronic processor 205 that indicates whether liquid is present.

At block 405, the first electronic processor 205 of the robotic mower 105 receives, from the sensor 151, a signal that indicates a capacitance level of an area/portion of the housing 125 of the robotic mower 105 and/or the control panel/user interface 127 (e.g., an area/portion 129A of the button 129, an indented indicator portion 132A, and/or the like). For example, the capacitance level of the area/portion 129A may increase from a default value because of liquid accumulating on a surface treated surface of the area/portion 129A or in a cavity of the indented portion 129A. In some instances, the capacitance level of the area/portion 129A may increase by a similar or different amount due to a user's finger or hand making contact with a surface of the housing 125 of the robotic mower 105 (e.g., the exterior surface 150A of the button 129). In some embodiments, the sensor 151 may be configured to provide a capacitance level of other various other area/portions of the housing 125, the user interface 127, and/or the button 129.

At block 410, the first electronic processor 205 of the robotic mower 105 (and/or an electronic processor of sensor 151) compares a capacitance level to a predetermined capacitance threshold to determine whether the capacitance level exceeds (i.e., passes) the predetermined capacitance threshold. For example, the predetermined capacitance threshold is associated with a predetermined amount of liquid (e.g., rain water) being present on/in the area/portion 129A of the button 129 (or some other area/portion of the robotic mower 105 such as the indented indicator portion 132A). In some instances, the predetermined capacitance threshold may be user-selectable, for example, via the control panel 127 and/or via a user input on the external device 115. In some instances, the predetermined capacitance threshold may be different for different areas/portions 129A, 132A of the robotic mower 105. In some instances, the first electronic processor 205 may be configured to compare the capacitance level to more than one predetermined capacitance threshold and take different actions in response to each predetermined capacitance threshold being exceeded as explained in greater detail below with respect to block 425.

In some instances, in response to the first electronic processor 205 determining that the capacitance level is less than or equal to the predetermined capacitance threshold (at block 410), the first electronic processor 205 may continue performing its current operation without taking any action. In such situations and as indicated in FIG. 4, the method 400 may proceed back to block 405 such that the first electronic processor 205 may continue to monitor the capacitance level (e.g., continuously, periodically, etc.). In instances that involve the use of a de-bounce time period, in response to the first electronic processor 205 determining that the capacitance level is less than or equal to the predetermined capacitance threshold, at optional block 415, the first electronic processor 205 may reset the de-bounce time to zero to indicate that a most recently measured capacitance level was below the predetermined capacitance threshold. For example, a de-bounce timer is initiated by the first electronic processor 205 (and/or an electronic processor of sensor 151) to run for a predetermined de-bounce time period (e.g., five (5) seconds). This de-bounce time period may be configured to be longer than a user would typically press the user-actuatable button 129. In this example, the first electronic processor 205 is configured to use the de-bounce timer to determine whether a signal related to the detected capacitance level that exceeds the predetermined capacitance threshold is caused by liquid accumulated in the area/portion 129A or caused by a user interaction with the button 129 (e.g., a user's finger or hand pressing the user-actuatable button 129). In some embodiments, the first electronic processor 205 of the robotic mower 105 may reset the de-bounce timer in response to determining that the capacitance level of the area/portion 129A is less than or equal to the predetermined capacitance threshold (at block 415). In some instances, as an alternative to the de-bounce timer, the first electronic processor 205 may require a certain amount of consecutive capacitance level readings to be above the predetermined capacitance level threshold in order to determine that liquid is present in the area/portion 129A of the button 129.

In some instances, in response to the first electronic processor 205 determining that the capacitance level is greater than a predetermined capacitance threshold (at block 410), the method 400 proceeds to optional block 420. Execution of block 420 allows the first electronic processor 205 to determine whether the capacitance level has exceeded the predetermined capacitance threshold for the predetermined de-bounce time-period. In some embodiments, the first electronic processor 205 may initiate/start the de-bounce timer in response to determining that the capacitance level exceeds the predetermined capacitance threshold (at block 410) when the de-bounce timer has not already been started (e.g., is not already running).

In response to the first electronic processor 205 determining that the de-bounce time has not elapsed (i.e., determining that the predetermined capacitance level has not been greater than the predetermined capacitance threshold for a time that exceeds the predetermined de-bounce time period) (at block 420), the first electronic processor 205 returns to block 405 to continue to monitor the capacitance level of the area/portion 129A in view of the predetermined capacitance threshold (at block 410). On the other hand, in response to the first electronic processor 205 determining that the de-bounce time has elapsed (i.e., determining that the predetermined capacitance level has been greater than the predetermined capacitance threshold for a time that exceeds the predetermined de-bounce time period) (at block 420), the method 400 proceeds to block 425 where the first electronic processor 205 controls an operation of the robotic mower 105 (as explained in greater detail below). In other words, the method 400 may proceed to block 425 in response to determining that the capacitance level has exceeded (i.e., passed) the predetermined capacitance threshold for the predetermined de-bounce time period (e.g., in response to determining that liquid has been detected based on the capacitance level and the de-bounce time elapsing).

As indicated by FIG. 4 and the corresponding explanation above, in some embodiments, if the first electronic processor 205 determines that the capacitance level of the area/portion 129A is greater than or equal to the predetermined capacitance threshold but that the predetermined de-bounce time-period has not elapsed, then the first electronic processor 205 may determine that the signal related to the detected capacitance level of the area/portion 129A may be associated with a user interaction with the button 129 (e.g., a user touching the button 129). Accordingly, the first electronic processor 205 may not determine that liquid is present in the area/portion 129A before the de-bounce time period elapses. In some embodiments, if the first electronic processor 205 determines that the capacitance level of the area/portion 129A is greater than the predetermined capacitance threshold and the predetermined de-bounce time-period has elapsed, then the first electronic processor 205 may determine that the signal related to the detected capacitance level of the area/portion 129A is associated with liquid accumulated in the area/portion 129A.

As indicated by the dashed lines of blocks 415 and 420 in FIG. 4, these blocks are optional to implement the de-bounce time and predetermined de-bounce time period explained previously herein. In some instances, blocks 415 and 420 may not be present. For example, embodiments that include the sensor 151 mounted on an interior side wall 155 of the indented portion 129A (see FIG. 1E) may not use the de-bounce time since a user's finger or hand pressing the user-actuatable button 129 may not cause the capacitance level of the sensor 151 to increase above the predetermined capacitance threshold due to the location of the sensor 151 and the size of a cavity defined by the indented portion 129A.

At block 425, the first electronic processor 205 controls an operation of the robotic mower 105 in response to determining that the capacitance level exceeds (i.e., passes) the predetermined capacitance threshold (or, in some instances, in response to determining that the capacitance level has exceeded the predetermined capacitance threshold for the predetermined de-bounce time period). The first electronic processor 205 may control one or more operations of the robotic mower 105 at block 425. For example, the operation of the robotic mower 105 may include controlling the robotic mower 105 to navigate to the docking station 110, transmitting a liquid detection notification to the external device 115 via the first network interface 215, shutting down one or more motors of the robotic mower 105 (e.g., the cutting blade assembly motor 240, an edge cutting motor, etc.), or any combination thereof. As another example, the operation of the robotic mower 105 may additionally or alternatively include activating the liquid detection indicator 132.

As mentioned previously herein, in some instances, the first electronic processor 205 may compare the detected capacitance level to more than one predetermined capacitance thresholds. In such instances, the first electronic processor 205 may control different operations of the robotic mower 105 differently in response to determining that the capacitance level exceeds each predetermined capacitance level (in some instances, for longer than a de-bounce time period). For example, in response to determining that the capacitance level exceeds a first lower capacitance threshold, the first electronic processor 205 may transmit a liquid detection notification to the external device 115 to notify a user that liquid has been detected. For example, the liquid detection notification may be displayed on the second display 325 of the external device 115. The user may then decide whether to provide a manual command/instruction to the robotic mower 105 via the external device 115 to alter operation of the robotic mower 105. Continuing this example, in response to determining that the capacitance level exceeds a second higher capacitance threshold, the first electronic processor 205 may again transmit a liquid detection notification (i.e., a second liquid detection notification) to the external device 115 and may also control the robotic mower 105 to navigate to the docking station 110 to dock. The second liquid detection notification may indicate that the robotic mower 105 is returning to the docking station 110.

In addition to receiving notifications from the robotic mower 105, in some embodiments, the external device 115 may be configured to provide instructions/commands to the robotic mower 105 to control settings associated with liquid detection using the sensor 151. For example, the first electronic processor 205 may receive, from the external device 115 via the first network interface 215, a first indication of whether to enable or disable liquid detection by the first electronic processor 205 using the sensor 151. The first indication may be selected via a first user input on the external device 115. As another example, assuming that liquid detection is enabled, the first electronic processor 205 may receive, from the external device 115 via the first network interface 215, a second indication of how to control the operation of the robotic mower 105 in response to determining that the capacitance level exceeds the predetermined capacitance threshold. The second indication may be selected via a second user input on the external device 115. The second indication may be associated with user preferences of how to control the operation of the robotic mower 105 (at block 425) (e.g., whether to control the robotic mower 105 to send a notification to the external device 115, whether to control the robotic mower 105 to cease operation and return to the docking station 110, whether the first electronic processor 205 should use multiple capacitance thresholds and what type of action/control the first electronic processor 205 should execute in response to each capacitance threshold being exceeded, whether no action is taken by the robotic mower 105, and/or the like).

As indicated in FIG. 4, the method 400 may repeat to, for example, allow the first electronic processor 205 to continuously/dynamically/periodically determine the capacitance level (e.g., detect the presence of liquid) of area/portions 129A of the housing 125 such as the area/portion 129A of the button 129 on the user interface 127.

The embodiments described above and illustrated in the figures are presented by way of example only and are not intended as a limitation upon the concepts and principles of the present invention. As such, it will be appreciated that various changes in the elements and their configuration and arrangement are possible without departing from the spirit and scope of the present invention.

## Claims

1. A robotic garden tool comprising:
a housing;
a user interface forming part of an outer surface of the housing;
a sensor coupled to the user interface, the sensor configured to sense a capacitance level associated with at least a portion of the user interface; and
an electronic processor coupled to the sensor and configured to control an operation of the robotic garden tool based on an output of the sensor.

2. The robotic garden tool of claim 1, wherein the user interface comprises a user-actuatable button configured to enable user interaction with the robotic garden tool, and wherein the user-actuatable button includes the at least a portion of the user interface;
and optionally
wherein the user-actuatable button comprises an indented portion, the indented portion is indented in a shape to convey a function of the user-actuatable button to a user;
and optionally
wherein the user-actuatable button includes a user-actuatable stop button, and wherein the robotic garden tool is configured to stop operating in response to determining that the user-actuatable stop button has been actuated.

3. The robotic garden tool of claim 1, wherein the user interface comprises an indicator configured to provide a notification to a user, the indicator includes the at least a portion of the user interface; and
wherein the indicator includes a liquid detection indicator, and wherein the liquid detection indicator includes a light emitting element, an indented portion, or both the light emitting element and the indented portion.

4. The robotic garden tool of claim 1, wherein the at least a portion of the user interface includes a surface treated to increase an affinity of the surface to liquid to facilitate liquid accumulation on the surface.

5. The robotic garden tool of claim 1, wherein the sensor includes a sensing surface disposed on an interior surface of the at least a portion of the user interface.

6. The robotic garden tool of claim 1, wherein the electronic processor is configured to:
receive, from the sensor, a signal that indicates the capacitance level,
compare the capacitance level to a predetermined capacitance threshold, wherein the predetermined capacitance threshold is associated with a predetermined amount of liquid being present on the at least a portion of the user interface,
determine that the capacitance level has passed the predetermined capacitance threshold, and
in response to determining that the capacitance level has passed the predetermined capacitance threshold, control the operation of the robotic garden tool;
and optionally
wherein the electronic processor is configured to determine that the capacitance level has passed the predetermined capacitance threshold by determining that the capacitance level has passed the predetermined capacitance threshold for a predetermined de-bounce time period.

7. The robotic garden tool of claim 1, wherein the electronic processor is configured to control the operation of the robotic garden tool by at least one of:
(i) navigating the robotic garden tool to a docking station,
(ii) transmitting, via a network interface of the robotic garden tool, a liquid detection notification to an external device, or
both (i) and (ii).

8. A robotic garden tool comprising:
a housing;
an interface disposed on the housing, the interface configured to enable user interaction with the robotic garden tool;
an indented portion on the robotic garden tool;
a sensor coupled to the indented portion, the sensor configured to sense a capacitance level associated with at least a surface of the indented portion; and
an electronic processor coupled to the sensor and configured to control an operation of the robotic garden tool based on an output of the sensor.

9. The robotic garden tool of claim 8, wherein the sensor includes a sensing surface disposed on an interior surface of the indented portion.

10. The robotic garden tool of claim 8, wherein the sensor includes a sensing surface located on a side wall of an interior surface of the indented portion, a top wall of the interior surface of the indented portion, or both the side wall and the top wall.

11. The robotic garden tool of claim 8, wherein the interface includes the indented portion, and wherein the indented portion is indented in a shape to convey a function of the interface to a user.

12. The robotic garden tool of claim 8, wherein the interface includes a user-actuatable stop button, and wherein the indented portion is provided on the user-actuatable stop button.

13. The robotic garden tool of claim 8, wherein the interface includes a control panel configured to provide information to a user; and
wherein the indented portion is disposed within the control panel.

14. The robotic garden tool of claim 8, wherein the electronic processor is configured to:
receive, from the sensor, a signal that indicates the capacitance level,
compare the capacitance level to a predetermined capacitance threshold, wherein the predetermined capacitance threshold is associated with a predetermined amount of liquid being present on the at least a surface of the indented portion,
determine that the capacitance level has passed the predetermined capacitance threshold, and
in response to determining that the capacitance level has passed the predetermined capacitance threshold, control the operation of the robotic garden tool;
and optionally
wherein the electronic processor is configured to determine that the capacitance level has passed the predetermined capacitance threshold by determining that the capacitance level has passed the predetermined capacitance threshold for a predetermined de-bounce time period.

15. The robotic garden tool of claim 8, further comprising a network interface to allow the robotic garden tool to wirelessly communicate with an external device;
wherein the electronic processor is configured to receive, via the network interface, a first indication of whether to enable liquid detection by the electronic processor using the sensor, wherein the first indication is selected via a first user input on the external device;
and optionally
wherein the electronic processor is configured to receive, via the network interface, a second indication of how to control the operation of the robotic garden tool in response to determining that the capacitance level has passed a predetermined capacitance threshold, wherein the second indication is selected via a second user input on the external device.
